# EUROPÄISCHE PATENTSCHRIFT

(11) **EP 2 058 649 B1**
(45) Veröffentlichungstag und Bekanntmachung des Hinweises auf die Patenterteilung: **29.06.2011**
(21) Anmeldenummer: 07021539.7
(22) Anmeldetag: 06.11.2007
(51) Int. Cl.: G01N 27/406, H01M 8/04

(54) **Sensor-Brennstoffzelle**
Sensor fuel cell
Pile à combustible en tant que capteur

(43) Veröffentlichungstag der Anmeldung: 13.05.2009
(73) Patentinhaber: Micronas GmbH, 79108 Freiburg (DE)
(72) Erfinder: Erdler, Gilbert, 79100 Freiburg (DE); Reinecke, Holger, 79312 Emmendingen (DE); Müller, Claas, 79104 Freiburg (DE); Frank, Mirko, 79098 Freiburg (DE)
(74) Vertreter: Koch Müller Patentanwaltsgesellschaft mbH

(56) Entgegenhaltungen:
- EP-A- 0 268 768
- DE-A1- 10 255 736
- US-A- 4 863 813
- NOGAMI ET AL: "Hydrogen sensor prepared using fast proton-conducting glass films" SENSORS AND ACTUATORS B, ELSEVIER SEQUOIA S.A., LAUSANNE, CH, Bd. 120, Nr. 1, 14. Dezember 2006 (2006-12-14), Seiten 266-269, XP005685076 ISSN: 0925-4005
- WILBERTZ ET AL: "Suspended-Gate- and Lundstrom-FET integrated on a CMOS-chip" SENSORS AND ACTUATORS A, ELSEVIER SEQUOIA S.A., LAUSANNE, CH, Bd. 123-124, 23. September 2005 (2005-09-23), Seiten 2-6, XP005073431 ISSN: 0924-4247

## Beschreibung

Die Erfindung bezieht sich auf eine Sensor-Brennstoffzelle mit den oberbegrifflichen Merkmalen gemäß Patentanspruch 1.

DE 102 55 736 A1 beschreibt unter anderem eine Sensor-Brennstoffzelle, welche durch einen in deren Umgebung befindlichen ersten Stoff aktivierbar ist. Die Sensor-Brennstoffzelle weist auf einem Substrat eine katalytisch aktive Anode, eine Kathode, welche eine der Umgebung frei ausgesetzte Kathodenoberfläche aufweist, und eine protonenleitfähige Membran auf, welche zum Hindurchleiten von Protonen von der Anode zur Kathode zwischen der Anode und der Kathode angeordnet ist. Bei dieser Anordnung ist die Anode aus Palladium hergestellt und mit Wasserstoff gesättigt. Durch Hinzutreten von Luftsauerstoff aus der Umgebung an die Kathode entsteht entsprechend eine Spannung bzw. ein Stromfluss bei Anlegen entsprechender Schaltungselemente.

Vom Grundgedanken her ist somit eine der beiden Elektroden, das heißt die Anode oder die Kathode, direkt an dem Substrat angeordnet und vollständig von der Membran und der anderen Elektrode abgedeckt. Die abgedeckte Elektrode ist dabei als Speicher für einen der Stoffe ausgelegt, welcher als Reaktant in der Brennstoffzelle eingesetzt wird. Wenn als Reaktant Sauerstoff in oder an der abgedeckten Elektrode gespeichert wird, so kann die derart ausgebildete Brennstoffzelle bei Auftreten von Wasserstoff in der Umgebung als Sensor und Warneinrichtung eingesetzt werden.

Grundgedanke ist dabei jedoch, eine chip-integrierbare Brennstoffzelle auf einem Silizium-Substrat in Form eines Palladium-Films als integrierten (n) Wasserstoffspeicher auszubilden, um eine Energieversorgungsquelle bereitzustellen. Wesentlich ist außerdem, dass die abgedeckte Elektrode am Substrat mit einer ausreichenden Menge an dem Stoff bzw. Reaktant beaufschlagt wird, bevor die Membran und die zweite Elektrode darüber vollständig überdeckend ausgebildet werden. Entsprechend nachteilhaft ist, dass eine solche Anordnung bzw. Sensor-Brennstoffzelle nur eine begrenzte Lebensdauer bzw. eine nur begrenzte Einsatzdauer hat. Sobald das Reaktant an der abgedeckten Elektrode aufgebraucht ist, ist eine solche Sensor-Brennstoffzelle nicht mehr einsetzbar und muss ausgetauscht werden.

Ch. Wilbertz, H.P. Frerichs; I. Freund; M. Lehmann; "Supended Gate- and Lundström-FET integrated on a CMOS-chip"; Sensors & Actuators A 123-124 (2005); 2-6 beschreibt ein so genanntes Suspended Gate und einen Lundström FET (Feldeffekt Transistor) auf CMOS Substraten (CMOS: Complementary Metal Oxide Semiconductor / dt. komplementärer Metall-Oxid-Halbleiter). Bei den Lundström FET befindet sich eine wasserstoffsensitive Schicht auf der Gate-Elektrode, bei den Suspended Gate FET befindet sich die wasserstoffsensitive Schicht in einem definierten Abstand oberhalb der Gate-Elektrode. Eine Wasserstoffdetektion erfolgt über eine Änderung der Austrittsarbeit der wasserstoffsensitiven Elektroden, wodurch sich eine Schwellspannung der Transistoren ändert. Die Auflösungsgrenzen von Lundström Sensoren liegen typischerweise im unteren ppm Bereich, die Auflösungsgrenze der Suspended Gate FET im unteren Prozentbereich.

Nachteilhaft bei derartigen Lundström und SG-FET Sensoren ist, dass diese ständig ein Ausgangssignal liefern, welches einer Basislinendrift unterliegen kann. Die Auflösungsgrenze auf dieser Basis gefertigter Sensoren liegt im ppm- und unteren Prozent-Bereich. Lundström und SG-FET Sensoren sind aktive Systeme, so dass diese, um sie zu betreiben, ständig mit Energie versorgt werden oder teilweise geheizt werden müssen.

US 4,863,813 A ist eine Anordnung aus zwei Elektroden zu entnehmen, welche durch eine Trennschicht voneinander getrennt sind. Die erste Elektrode als Anode ist permeabel für sowohl einen Oxidant, beispielsweise Sauerstoff, als auch für den Brennstoff, beispielsweise Wasserstoff. Die zweite Elektrode ist als Kathode hingegen nicht-permeabel für den Oxidant. Die Trennschicht ist als Elektrolyt ausgebildet und besteht im Wesentlichen aus einem elektronen-isolierenden -Material, welches für zumindest eine Ionenart ionen-leitfähig ist, wobei das Material des Elektrolyts für den Oxidant, den Brennstoff und Produkte von elektrochemischen Reaktionen des Oxidanten und des Brennstoffs permeabel sein soll. Die erste Elektrode ist einer Umgebung aussetzbar, in welcher ein Gemisch vorliegt, welches aus dem Oxidanten und dem Brennstoff besteht. In den Elektrodenschichten sind Öffnungsstrukturen in dem Material erzeugt, welche einen Durchtritt der Strömung des Brennstoff- und des Oxidant-Materials zu der Oberfläche des festen Elektrolyts ermöglichen. Das Gemisch aus Oxidant und Brennstoff ist gegenüber der Kathode jedoch abgeschirmt.

EP 0268768 A beschreibt einen Sensor zur Überwachung von Wasserstoffkonzentrationen in Gasen. Der Sensor ist mit einer Abdeckung versiegelt, die eine Refernzelektrode abdeckt und zumindest einen Teil einer Nachweiselektrode frei lässt. Die Nachweiselektrode besteht aus Pt, Pd oder Palladiumoxid.

Nogami M., Matsumura M., Daiko M., "Hydrogen sensor prepared using fast proton-conducting glass films", SENSORS AND ACTUATORS B, vol. 120, p. 266-269 (2996) offenbart einen Wasserstoffsensor, bei dem protonenleitende Schichten auf einem Silizium Wafer abgeschieden wurden.

Die Aufgabe der Erfindung besteht darin, eine Sensor-Brennstoffzelle bereitzustellen, welche eine breitere Einsatzmöglichkeit bei zugleich einfachem Aufbau ermöglicht.

Diese Aufgabe wird durch die Sensor-Brennstoffzelle mit den Merkmalen des Patentanspruchs 1 gelöst. Vorteilhafte Ausgestaltungen sind Gegenstand von abhängigen Ansprüchen.

Bevorzugt wird demgemäß eine Sensor-Brennstoffzelle, welche durch einen ersten Stoff in deren Umgebung aktivierbar ist und aufweist eine katalytisch aktive Anode, eine Kathode, welche eine zumindest teilweise der Umgebung frei ausgesetzte Kathodenoberfläche aufweist, und eine protonenleitfähige Membran, welche zum Hindurchleiten von Protonen von der Anode zu der Kathode zwischen der Anode und der Kathode angeordnet ist. Vorteilhaft wird diese Sensor-Brennstoffzelle dadurch, dass eine Anodenoberfläche der Anode der Umgebung teilweise frei ausgesetzt ist für einen Zutritt zumindest eines zweiten Stoffes aus der Umgebung zu der Anode.

Eine solche Anordnung ermöglicht den Zutritt eines ersten Reaktants in Form von z.B. Sauerstoff aus der Luft der Umgebung zu der Kathode und zusätzlich den Zutritt eines zweiten Reaktants in Form von z.B. einem kohlenwasserstoffhaltigen Stoff oder insbesondere Wasserstoff aus der Luft der Umgebung zu der freien Oberfläche der Anode. Ermöglicht wird auf überraschend einfache Art und Weise ein eigenständiger und prinzipiell unbegrenzt dauerhafter Einsatz, da keine sich erschöpfende Kohlenwasserstoff- oder Sauerstoffquelle in dem Sensor integriert sein muss.

Somit werden beide Reaktanten den Elektroden von Außen aus der Umgebung zugeführt. Aufgrund der katalytisch aktiven Elektroden kommt es zur Brennstoffzellenreaktion, wobei der erzeugte Strom bzw. die erzeugte Spannung dabei in einem direkten Verhältnis zur Konzentration der Reaktanten in der Umgebung steht.

Die Membran und die Kathode sind bevorzugt so dimensioniert auf der Anodenoberfläche angeordnet, dass die Anodenoberfläche der Anode von der Membran und der Kathode zumindest teilweise nicht bedeckt ist. Zwischen einem Außenumfang der Membran und einem Außenumfang der Kathode verbleibt in einer Erstreckung in einer Ebene der Anodenoberfläche zu einem Außenumfang der Anodenoberfläche vorzugsweise ein freier Abstand, über den die Anodenoberfläche zur Umgebung frei zugänglich ist für den Zutritt zumindest eines zweiten Stoffes aus der Umgebung. Derartige Ausgestaltungen belassen bereits ausreichend Freiraum, um den Zutritt des zweiten Stoffes zu der Anode zu ermöglichen, um eine Brennstoffzellenreaktion zu ermöglichen.

Die Anode ist mit einer der Anodenoberfläche abgewandten Oberfläche bevorzugt auf oder in einem Substrat angeordnet. Bevorzugt ist die Anode aus einem Material ausgebildet, welches für den zweiten Stoff und/oder Protonen und/oder vorzugsweise Wasserstoff durchdringbar ist oder einlagerfähig ist für den zweiten Stoff und/oder Protonen und/oder vorzugsweise Wasserstoff in zumindest dessen Oberfläche.

Die Anode kann vorzugsweise aus Palladium ausgebildet sein oder Palladium aufweisen. Dadurch kann insbesondere Wasserstoff in die Anode eindringen und durch diese hindurch zu der Membran gelangen, durch welche dann die Protonen zu der Kathode treten, wenn ein außenseitiger Stromkreis geschlossen ist.

Durch geeignete Wahl des Materials des Speichers bzw. der wasserstoffsensitiven Schicht sind höhere Konzentrationen detektierbar.

Das Substrat ist bevorzugt aus Silizium ausgebildet. Dies ermöglicht eine einfache Fertigung als eine Halbleiterkomponente, insbesondere als eine CMOS kompatibel herstellbare Brennstoffzelle auf einem Halbleitersubstrat.

Die Anode ist bevorzugt im Bereitstellungszustand und/oder in einem Standard-Betriebszustand frei von dem zweiten Stoff. Dadurch wird verhindert, dass bereits bei der Installation der Sensor-Brennstoffzelle ein Stromfluss entstehen kann und erst im Fall der späteren Detektion des dem zweiten Stoff entsprechenden Mediums, insbesondere Wasserstoff, eine Spannung entsteht und dadurch ein Stromfluss durch eine angeschlossene Schaltung oder sonstige Komponenten ermöglicht wird. Das System liefert vorteilhaft nur dann ein Sensorsignal wenn das zu detektierende Gas in der Umgebung ist. Es ist somit selbst aktivierend bzw, ein passives Sensorsystem, welches Energie bei der Detektion von Wasserstoff erzeugt.

Bevorzugt ist die Sensor-Brennstoffzelle für eine Reaktion von Sauerstoff als dem ersten Stoff und einem kohlenwasserstoffhaltigen Stoff oder Wasserstoff als dem zweiten Stoff ausgebildet.

Eigenständig vorteilhaft ist außerdem ein Sensorsystem mit einer derart ausgebildeten Sensor-Brennstoffzelle und mit zumindest einer ein Sensorsignal verarbeitenden Komponente, wobei die Sensor-Brennstoffzelle zum Bereitstellen des Sensorsignals als Spannung und/oder Stromfluss von der Sensor-Brennstoffzelle bei vorliegen der beiden Stoffe in der Umgebung der Sensor-Brennstoffzelle geschaltet ist. Da sich das Sensorsystem aus der Umgebung mit den Reaktanten von selbst versorgt, kann somit eine "unbegrenzte Laufzeit" garantiert werden. Das Sensorsystem liefert beim Messvorgang Energie, welche dazu genutzt werden kann, um das Sensorsystem mit Energie zu versorgen bzw. erfasste Messdaten und/oder das Sensorsignal zu verarbeiten.

Verschiedene beispielhafte Anwendungen sind umsetzbar, wie ein Wasserstoffsensor zu Detektion hoher Wasserstoffkonzentrationen, insbesondere Knallgasgemische. Umsetzbar ist auch ein CMOS Wasserstoffsensorsystem mit SG-FET und Lundström und einer Sensor-Brennstoffzelle zur Bestimmung der Wasserstoffkonzentration vom ppm-Bereich bis in den hohen Prozent Bereich. Dadurch ist auch ein sich selbst aktivierender Schwellwert-Sensor zur Detektion explosiver Knallgasgemische mit extrem langer Betriebszeit umsetzbar.

Ermöglicht wird sogar ein Aufbau eines autonomen Wasserstoff-Sensorsystems inklusive einer Funkeinrichtung. Das Sensorsystem erzeugt bei der Wasserstoffdetektion die notwendige Leistung zur Aktivierung des Sensorsystems, so dass anschließend das Messsignal, z.B. ein Schwellwert eines Knallgases, an eine Zentrale gefunkt werden kann.

Ein Ausführungsbeispiel wird nachfolgend anhand der Zeichnung näher erläutert. Es zeigen:
- Fig. 1: eine beispielhafte schematische Anordnung einer Sensor-Brennstoffzelle in Seitenansicht und
- Fig. 2: diese Sensor-Brennstoffzelle gemäß Fig. 1 in Draufsicht.

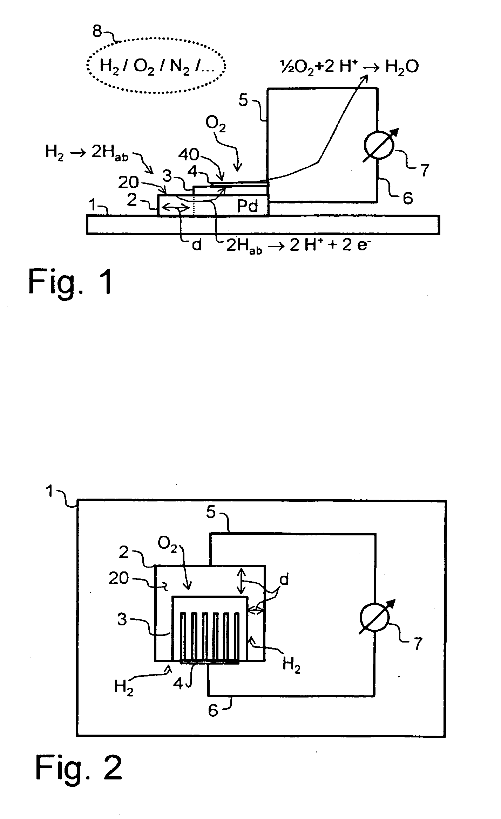

Wie aus Fig. 1 und 2 ersichtlich, handelt es sich bei einer besonders bevorzugten Ausgestaltung um eine Sensor-Brennstoffzelle in Form einer Wasserstoff-Sensor-Brennstoffzelle, welche CMOS-kompatibel auf einem Halbleitersubstrat ausgebildet ist. Beispielhaft ist entsprechend ein Substrat 1 aus vorzugsweise Silizium abgebildet, auf und/oder in welchem die weiteren Elemente der Sensor-Brennstoffzelle angeordnet bzw. integriert sind.

Auf einer Oberfläche des Substrats 1 ist eine katalytisch aktive Anode 2 ausgebildet. Die katalytisch aktive Anode 2 ist vorzugsweise aus Palladium Pd ausgebildet und bevorzugt als ein Palladium-Film auf der Oberfläche des Substrats 1 abgeschieden. Auf einer dem Substrat 1 gegenüberliegenden Oberfläche weist die katalytisch aktive Anode 2 eine Anodenoberfläche 20 auf, welche teilweise von weiteren Komponenten bedeckt ist und zumindest teilweise gegenüber einer Umgebung 8 frei zugänglich geblieben ist. Durch die Umgebung 8 kann ein in der Umgebung 8 befindlicher zweiter Stoff H₂, insbesondere ein Reaktant in Form von beispielsweise Wasserstoff an die Anodenoberfläche 20 gelangen.

Unter der Umgebung wird dabei ein Raum verstanden, welcher nicht körperlich mit der Sensor-Brennstoffzelle verbunden ist, wie eben insbesondere der Bereich der diese und deren Träger umgebenden Luft. Aber auch ein Einsatz in einem Fluid oder einer Flüssigkeit ist möglich, welche dann den Raum der Umgebung ausfüllen.

Auf dem übrigen Teil der Anodenflächen 20 ist eine protonenleitfähige Membran 3 angeordnet, insbesondere fest ausgebildet. Auf einer der Anodenoberfläche 20 gegenüberliegenden Oberfläche der Membran 3 ist eine Kathode 4 ausgebildet, welche die Membran 3 teilweise oder vollständig bedeckt. Eine der Membran 3 gegenüberliegende Kathodenoberfläche 40 der Kathode 4 ist ebenfalls zur Umgebung 8 hin frei, so dass aus der Umgebung 8 ein erster Stoff O₂, beispielsweise Sauerstoff, an die Kathodenoberfläche 40 treten kann.

Wesentlich ist somit, dass sowohl die Kathodenoberfläche 40 der Kathode 4 zumindest teilweise der freien Umgebung 8 ausgesetzt ist und zusätzlich auch ein Teil der Anodenoberfläche 20 der katalytisch aktiven Anode 2 der Umgebung 8 frei zugänglich ausgesetzt ist.

Dabei muss nicht zwingend dieselbe Umgebung 8 für die freie Kathodenoberfläche 40 und die freie Anodenoberfläche 20 zugänglich sein. Prinzipiell ist auch eine Trennung möglich, so dass die Anodenoberfläche 20 einem anderen räumlichen Umgebungsbereich zugänglich ist als die Kathodenoberfläche 40 der Kathode 4. In diesem Fall würde durch die beiden verschiedenen Umgebungsbereiche der Umgebung der Kathodenoberfläche 40 zumindest der erste Stoff und der Anodenoberfläche 20 zumindest der zweite Stoff H₂ zugeführt werden können bzw. müssen.

Über Kontakte bzw. Leiter 5, 6 können in für sich bekannter Art und Weise eine oder mehrere ein Sensorsignal verarbeitende Komponenten 7 an die beiden Elektroden, das heißt an die Anode 2 bzw. an die Kathode 4 angeschlossen werden. Bei Auftreten von beispielsweise Sauerstoff als dem ersten Stoff O₂ und Wasserstoff als dem zweiten Stoff H in der Umgebung 8 und gegebenenfalls auch weiteren Stoffen in der Umgebung 8 gelangt der Wasserstoff über die unbedeckte Fläche der Anode 2 in diese hinein und es erfolgt eine für sich bekannte Brennstoffzellenreaktion von Wasserstoff und Sauerstoff zu Wasser unter Abgabe von elektrischer Leistung. Folglich ist eine solche Sensor-Brennstoffzellenanordnung bei Fehlen eines der beiden Stoffe O₂, H₂ passiv, während diese Anordnung aktiv wird, wenn der andere der beiden Stoffe H₂, O₂ zusätzlich in der Umgebung 8 auftritt und an die entsprechende der beiden Elektroden gelangt.

Es handelt sich somit um eine selbst-aktivierende Sensor-Brennstoffzelle. Der zu messende Strom und die Zellspannung, somit die Zellleistung, stehen in einem direkten Zusammenhang mit der Konzentration des Wasserstoffs in der Anode und somit mit dem Wasserstoff in der Umgebung 8, wenn übliche Umgebungen mit einem ausreichenden Sauerstoffgehalt vorausgesetzt werden.

Vorzugsweise kann somit insbesondere auch ein Sensorsystem mit einer derartigen, das Sensorsignal verarbeitenden Komponente und mit einer derartigen Sensor-Brennstoffzelle bereitgestellt werden, wobei das Sensorsignal als die Spannung und/oder der Stromfluss von der Sensor-Brennstoffzelle bei Vorliegen der beiden Stoffe O₂, H₂ in der Umgebung 8 der Sensor-Brennstoffzelle bereitgestellt wird. Die in der Sensor-Brennstoffzelle bei Vorliegen beider Stoffe O₂, H₂ entstehende elektrische Leistung kann somit dazu genutzt werden, das Sensorsignal als Messsignal anzusehen und entsprechend weiterzuverarbeiten. Insbesondere vorteilhaft ist, dass ein solches Sensorsystem als ein Messsystem selber bei Vorliegen beider Stoffe O₂, H₂ in den aktiven Zustand versetzt wird und zugleich mit ausreichender elektrischer Energie zum Betreiben des Sensorsystems versorgt wird, wenn gewisse Schwellwerte der Stoffmengen der beiden Stoffe O₂, H₂ in der Umgebung 8 überschritten werden, um ausreichend elektrische Leistung zu erzeugen.

Besonders bevorzugt wird eine Sensor-Brennstoffzelle in Form einer chip-integrierten Brennstoffzelle, wobei die Anode 2 aus vorzugsweise Palladium Pd, die protonenleitfähige Membran aus vorzugsweise Tantalpentoxid Ta₂O₅ und die katalytisch aktive Kathode aus vorzugsweise Platin Pt als Dünnfilme auf einem Substrat aus vorzugsweise Silizium Si aufgebracht sind. Jedoch sind auch andere Ausgestaltungen prinzipiell umsetzbar.

Insbesondere kann alternativ anstatt einer Wasserstoff zu speichernden und/oder zu leitenden Schicht eine katalytisch aktive Anode 2 vorgesehen werden, welche Kohlenwasserstoffe, beispielsweise Methanol, Ethanol oder Zucker, oxidiert und die entstehende Energie bei der Detektion freisetzt. Dadurch können auch andere zweite Stoffe, insbesondere andere oxidierbare Gase, Fluide oder Flüssigkeiten mit einer solchen Sensor-Brennstoffzelle detektiert werden.

Optional können auch weitere Komponenten vorgesehen werden, wie insbesondere eine Funkschnittstelle, und Komponenten, welche bei Detektion beider Stoffe und somit Aktivierung des Sensorsystems ein Funksignal generieren und über eine solche Funkschnittstelle an eine entfernte Zentrale übertragen. Natürlich sind auch andere Schnittstellen möglich, insbesondere kabelgebundene Schnittstellen, um eine Aktivierung eines solchen Sensorsystems zu erfassen und gegebenenfalls eine Intensität der Mengen der erfassten Stoffe zu übertragen.

## Patentansprüche

1. Sensor-Brennstoffzelle, welche durch einen ersten Stoff (02) In deren Umgebung (8) aktivierbar ist, aufweisend
- eine katalytisch aktive Anode (2),
- eine Kathode (4), welche eine zumindest teilweise der Umgebung (8) frei ausgesetzte Kathodenoberfläche (40) aufweist, und
- eine protonenleitfähige Membran (3), welche zum Hlndurchleiten von Protonen von der Anode (2) zu der Kathode (4) zwischen der Anode (2) und der Kathode (4) angeordnet ist,
**dadurch gekennzeichnet, dass**
- eine Anodenoberfläche (20) der Anode (2) der Umgebung (8) tellweise frei ausgesetzt ist für einen Zutritt zumindest eines zweiten Stoffes (H2) aus der Umgebung (8) zu der Anode (2), und
der zweite Stoff über die unbedeckte Fläche der Anode (2) in diese hineingelangt, und
bei der die Anode (2) mit einer gegenüber der Anodenoberfläche (20) abgewandten Oberfläche auf oder in einem Substrat (1) angeordnet ist.

2. Sensor-Brennstoffzelle nach Anspruch 1, bei der die Membran (3) und die Kathode (4) so dimensioniert auf der Anodenoberfläche (20) angeordnet sind, dass die Anodenoberfläche (20) der Anode (2) von der Membran (3) und der Kathode (4) zumindest teilweise nicht bedeckt ist.

3. Sensor-Brennstoffzelle nach Anspruch 1 oder Anspruch 2, bei der zwischen einem Außenumfang der Membran (3) und einem Außenumfang der Anode (2) in einer Erstreckung in einer Ebene der Anodenoberfläche (20) eine freier Abstand (d) verbleibt, über den die Anodenoberfläche (20) zur Umgebung (8) frei zugänglich ist für den Zutritt zumindest eines zweiten Stoffes (H2) aus der Umgebung (8).

4. Sensor-Brennstoffzelle nach einem vorstehenden Anspruch, bei der die Anode (2) aus einem Material ausgebildet Ist, welches für den zweiten Stoff (H2) und / oder Protonen und / oder Wasserstoff durchdringbar Ist und einlagerfähig ist für den zweiten Stoff (H2) und / oder Protonen und / oder Wasserstoff (H2) in zumindest dessen Oberfläche.

5. Sensor-Brennstoffzelle nach einem vorstehenden Anspruch, bei der die Anode (2) aus Palladium (Pd) ausgebildet ist oder Palladium (Pd) aufweist.

6. Sensor-Brennstoffzelle nach einem vorstehenden Anspruch, bei der das Substrat (1) aus Silizium ausgebildet ist.

7. Sensor-Brennstoffzelle nach einem vorstehenden Anspruch, bei der die Anode (2) im Bereitstellungszustand und / oder in einem Standard-Betriebszustand frei von dem zweiten Stoff (H2) ist.

8. Sensor-Brennstoffzelle nach einem vorstehenden Anspruch, welche für eine Reaktion von Sauerstoff als dem ersten Stoff (02) und einem kohlenwasserstoffhaitigen Stoff oder Wasserstoff als dem zweiten Stoff (H2) ausgebildet ist.

9. Sensorsystem mit zumindest einer eine Sensorsignal verarbeitenden Komponente (7) und mit einer Sensor-Brennstoffzelle., die zum Bereitstellen des Sensorsignals als Spannung und / oder Stromfluss von der Sensor-Brennstoffzelle bei Vorliegen der beiden Stoffe (02, H2) In der Umgebung der Sensor-Brennstoffzelle geschaltet Ist, wobei die Sensor-Brennstoffzelle nach einem vorstehenden Anspruch ausgebildet ist.

## Claims

1. Sensor fuel cell, which is activatable by a first substance (O₂) in the environment (8) thereof, comprising
- a catalytically active anode (2),
- a cathode (4) which has a cathode surface (40) freely exposed at least in part to the environment (8) and
- a proton-conductive membrane (3) which for the passage of protons from the anode (2) to the cathode (4) is arranged between the anode (2) and the cathode (4),
**characterised in that**
- an anode surface (20) of the anode (2) is freely exposed at least in part to the environment (8) for access of at least a second substance (H₂) from the environment (8) to the anode (2), the second substance passes over the uncovered area of the anode (2) into this and wherein the anode (2) is arranged by a surface, which is remote from the anode surface (20), on or in a substrate (1).

2. Sensor fuel cell according to claim 1, in which the membrane (3) and the cathode (4) are arranged with such dimensioning on the anode surface (20) that the anode surface (20) of the anode (2) is at least in part free of covering by the membrane (3) and the cathode (4).

3. Sensor fuel cell according to claim 1 or claim 2, in which a free spacing (d), by way of which the anode surface (20) is freely accessible to the environment (8) for the access of at least a second substance (H₂) from the environment (8), remains between an outer circumference of the membrane (3) and an outer circumference of the anode (2) in an extension in a plane of the anode surface (20).

4. Sensor fuel cell according to a preceding claim, in which the anode (2) is formed from a material which is permeable to the second substance (H₂) and/or protons and/or hydrogen and which has storage capability with respect to the second substance (H₂) and/or protons and/or hydrogen (H₂) in at least the surface thereof.

5. Sensor fuel cell according to a preceding claim, in which the anode (2) is constructed from palladium (P_{d}) or comprises palladium (P_{d}).

6. Sensor fuel cell according to a preceding claim, in which the substrate (1) is made of silicon.

7. Sensor fuel cell according to a preceding claim, in which the anode (2) in readiness state and/or in a standard operational state is free of the second substance (H₂).

8. Sensor fuel cell according to a preceding claim, which is constructed for reaction of oxygen as the first substance (O₂) and a substance, which has hydrocarbon content, or hydrogen as the second substance (H₂).

9. Sensor system with at least one component (7) processing a sensor signal and with a sensor fuel cell, which is connected for providing the sensor signal as a voltage and/or current flow from the sensor fuel cell in the case of presence of the two substances (O₂, H₂) in the environment of the sensor fuel cell, wherein the sensor fuel cell is constructed in accordance with a preceding claim.

## Revendications

1. Capteur en pile à combustible activable par une première substance présente (O₂) dans son environnement (8) comprenant
. une anode catalytique active (2) une cathode (4) qui présente une surface de cathode (40) exposée au moins partiellement dans l'environnement (8) et,
. une membrane (3) conductrice aux protons qui est perméable aux protons venant de l'anode (2) vers la cathode (4), et placée entre l'anode (2) et la cathode (4),
**caractérisée par**
. une surface d'anode (20) de l'anode (2) exposée partiellement à découvert par rapport à l'environnement (8) pour l'accès au moins d'une deuxième substance (H₂) sortant de l'environnement (8) vers l'anode (2)
et en ce que
la deuxième substance pénètre par la surface découverte de l'anode (2), et que
l'anode (2) est placée sur ou dans un substrat (1) et présente une surface tournée à l'opposé de la surface d'anode (20).

2. Capteur selon la revendication 1 **caractérisée en ce que** la membrane (3) et la cathode (4) sont prévues de dimensions telles sur la surface d'anode (20), que la surface d'anode (20) de l'anode (2) ne sont couvertes par la membrane (3) et la cathode (4) que partiellement.

3. Capteur selon la revendication 1 ou la revendication 2 **caractérisée en ce qu'**entre une périphérie extérieure de la membrane (3) et une périphérie extérieure de l'anode (2) sur une étendue dans un plan de la surface d'anode (20) il reste un intervalle libre (d) au-dessus duquel la surface d'anode (20) donnant sur l'environnement (8) est libre pour l'entrée d'au moins une deuxième matière (H2) sortant de l'environnement (8).

4. Capteur selon l'une des revendications précédentes **caractérisée en ce que** l'anode (2) est réalisée en un matériau qui est perméable à la deuxième substance (H₂) et/ou aux protons et/ou à l'hydrogène et stockable pour la deuxième substance (H₂) et/ou les protons et/ou l'hydrogène (H₂) au moins dans cette surface.

5. Capteur selon l'une des revendications précédentes **caractérisée en ce que** l'anode (2) est en Palladium (Pd) ou présente du Palladium.

6. Capteur selon l'une des revendications précédentes **caractérisée en ce que** le substrat (1) est en silicium.

7. Capteur selon l'une des revendications précédentes **caractérisé en ce que** dans un état d'attente et/ou dans un état standard de fonctionnement l'anode (2) est exempte de la deuxième substance (H₂).

8. Capteur selon l'une des revendications précédentes **caractérisée en ce qu'**elle est prévue pour une réaction où l'oxygène est la première matière (O₂) et un hydrocarbure ou de l'hydrogène pour la deuxième substance (H₂).

9. Système de capteur comprenant au moins un composant (7) de traitement du signal de capteur et un capteur en pile à combustible, pour délivrer un signal de capteur en tension et/ou en courant en présence des deux substances (O₂) et (H₂) dans l'environnement du capteur **caractérisé en ce qu'**il comporte un capteur selon l'une des revendications précédentes.
